(19) Europäisches Patentamt
European Patent Office
Office européen des brevets

(11) **EP 3 179 343 A1**

(12) **EUROPEAN PATENT APPLICATION**
published in accordance with Art. 153(4) EPC

(43) Date of publication:
**14.06.2017 Bulletin 2017/24**

(51) Int Cl.:
***G06F 3/041*** *(2006.01)*

(21) Application number: **15829996.6**

(22) Date of filing: **24.07.2015**

(86) International application number:
**PCT/CN2015/085000**

(87) International publication number:
**WO 2016/019811 (11.02.2016 Gazette 2016/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **06.08.2014 CN 201420439245 U**

(71) Applicant: **Hu, Jingtao**
**Guangdong 523221 (CN)**

(72) Inventor: **Hu, Jingtao**
**Guangdong 523221 (CN)**

(74) Representative: **Hannke, Christian**
**Hannke Bittner & Partner**
**Patent- und Rechtsanwälte mbB**
**Prüfeninger Straße 1**
**93049 Regensburg (DE)**

(54) **TOUCH-TYPE CONTROLLER**

(57) A touch-type controller, comprising a touch sensing device (102), a gravity sensing device (104), a physical key (103), a control circuit (101) and a power supply device (106). The touch sensing device (102), the gravity sensing device (104) and the physical key (103) are respectively connected to the control circuit (101), the touch sensing device (102) comprises a touch panel and a physical button, the physical button is arranged below the touch panel and is combined with the touch panel to form a physical touch key, and the touch sensing device (102), the gravity sensing device (104) and the control circuit (101) are all connected to the power supply device (106). By means of a simple design, the touch-type controller can implement multifunctional control over the device by utilizing the touch sensing device (102), thereby facilitating the use by a user, and saving costs for purchasing other control devices by the user. Meanwhile, the touch-type controller innovatively employs gravity sensing technology in the controller and can provide different operation schemes according to user's different hand-held directions, thereby improving the user experience.

Figure1

## Description

## FIELD OF THE INVENTION

The present invention relates to the field of control devices, in particular, to a touch sensing controller.

## BACKGROUND OF THE INVENTION

With the increasing popularization of smart devices, controllers play a key role in human-computer interaction between users and smart devices. Smart devices which allow users to play games, watch videos, and browse the internet, such as android TV boxes, become more and more welcome.

However, the existing controllers matching to the smart devices bring terrible user experience due to single-function, or complex and confusing design thereof.

Besides, most of mobile games are controlled via the touch screen. A gap in the market needs to be filled with game controllers which are suited for both the traditional games under the control of a directional pad and mobile touch-screen games.

In conclusion, a well designed handy multifunctional controller capable of carrying out the functions such as video control, text input, traditional games control, touch-screen games control and acting as a mouse is in great need.

## SUMMARY OF THE INVENTION

The present invention aims to provide a well designed handy controller which is able to realize multifunctional control by using a touch sensing device.

A touch sensing controller according to the present invention comprises a touch sensing device, a gravity sensing device, physical buttons, a control circuit and a power supply device.

The touch sensing device, the gravity sensing device and the physical buttons are connected to the control circuit individually. The touch sensing device comprises a touch pad and a physical key; the physical key is provided underneath the touch pad and together with the touch pad composes a physical touch key.

The touch sensing device, the gravity sensing device and the control circuit are all connected to the power supply device.

Further, the touch sensing controller further comprises a data output device.

Preferably, the control circuit further comprises a microprocessor.

Preferably, the controller further comprises a physical mode switch button and a mode indicator light.

The physical mode switch button and the mode indicator light are connected to the control circuit individually; and the mode indicator light is also connected to the power supply device.

Preferably, the touch sensing device comprises a touch pad and a physical key; the physical key is provided underneath the touch pad and together with the touch pad composes a physical touch key.

Preferably, the surface of the touch pad is provided with lines which can be perceived by a user through fingering and partition the touch pad into several touch areas.

Preferably, the touch areas comprise a central touch area and multiple surrounding touch areas around the central touch area.

Preferably, the physical buttons are programmable.

The touch sensing controller provided by the present invention is able to realize the functions of menu selection, computer mouse, text input, traditional games control, mobile touch-screen games control, and human-computer interaction with various smart devices and computers, which brings great convenience to users and saves the expense for other control devices.

Meanwhile, the present invention applies the gravity sensing technique to the controller, whereby various operation solutions are provided on the basis of the direction in which the controller is held, and the user experience is optimized.

Besides, the touch sensing controller of the present invention is advanced in compactness and portability.

## BRIEF DESCRIPTION OF THR DRAWINGS

Figure 1 is a structural diagram showing a touch sensing controller according to a first embodiment of the present invention.

Figure 2 is a diagram showing an external structure of the touch sensing controller according to the first embodiment of the present invention.

Figure 3 is a diagram showing the partition of a touch pad of the touch sensing controller according to the first embodiment of the present invention.

Figure 4 is a structural diagram showing data flow of the touch sensing controller according to a second embodiment of the present invention.

Figure 5 is a diagram showing the mapping between the touch areas and keys when the touch sensing controller according to the second embodiment of the present invention is held vertically.

Figure 6 is a diagram showing the mapping between the touch areas and the keys when the touch sensing controller according to the second embodiment of the present invention is held horizontally.

Figure 7 is a diagram showing the control operation of touch-screen games by the touch sensing controller according to the second embodiment of the present invention

**DETAILED DESCRIPTION OF THE PREFERRED EMBODIMENTS**

So as to show the aims, technical solutions and advantages of the present invention clearly, the embodiments of the present invention will be described distinctly and completely accompanied with the drawings hereinafter.

Embodiment 1

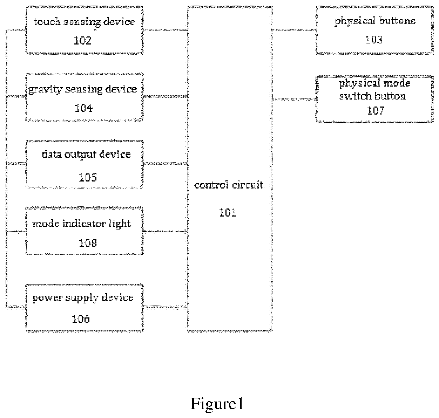

Figure 1 is a structural diagram showing a touch sensing controller according to a first embodiment of the present invention.

In the embodiment 1, the touch sensing controller comprises a control circuit 101, a touch sensing device 102, physical buttons 103 and a gravity sensing device104, preferably, the touch sensing controller further comprises a data output device 105 and a power supply device 106. The touch sensing device 102, the gravity sensing device 104, the data output device 105 and the physical buttons 103 are connected to the control circuit 101 individually.

The touch sensing device 102, the gravity sensing device 104, the control circuit 101 and the data output device 105 are all connected to the power supply device 106. The touch sensing device 102 comprises a touch pad and a physical key; the physical key is provided underneath the touch pad and together with the touch pad composes a physical touch key.

Preferably, the control circuit 101 comprises a microprocessor.

Further, the controller further comprises a physical mode switch button and a mode indicator light 108. The physical mode switch button and the mode indicator light 108 are connected to the control circuit 101 individually; and the mode indicator light 108 is also connected to the power supply device 106.

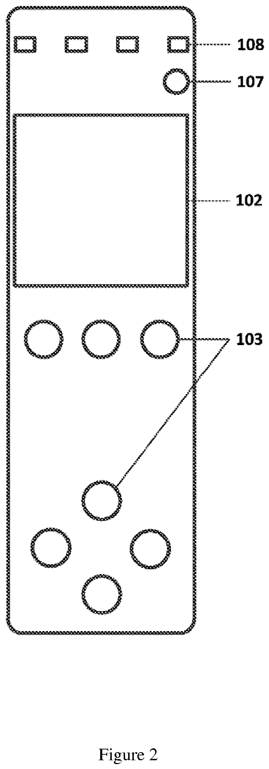

Figure 2 shows an external structure of the touch sensing controller according to the first embodiment of the present invention.

As shown in figure 2, the external hardware comprises: a touch sensing device 102, physical buttons 103, a physical mode switch button 107 and a mode indicator light 108, while the elements within the casing such as the gravity sensing device 104, the power supply device 106, the control circuit 101, the microprocessor and the data output device 105 within the control circuit 101 are not shown in figure 2.

Preferably, the mode indicator light 108 is located on the uppermost position of the casing and the physical mode switch button 107 is only next to it, the touch pad is located on the upper-middle part of the casing.

Preferably, there are seven physical buttons 103, wherein three of them are configured on the middle part of the casing, and the other four are configured on the lower part thereof, in the shape of rhombus.

In this embodiment, the physical buttons 103 are preferred to be programmable. The skilled in the art can assign a specific function to each physical button 103 according to practical needs, for instance, the physical buttons 103 may be configured as on/off button, directional button, pause button/play button and so on. Besides, customized function can be assigned for a long-press on a certain button, such as on/off. Obviously, other functions may be realized by certain combinations of these programmable physical buttons.

In practice, the surface of the touch pad is further provided with lines which can be perceived by a user through fingering. The lines partition the touch pad into several touch areas to enable the user's finger to touch the corresponding touch area precisely. The touch areas include a central touch area and multiple surrounding touch areas around the central touch area.

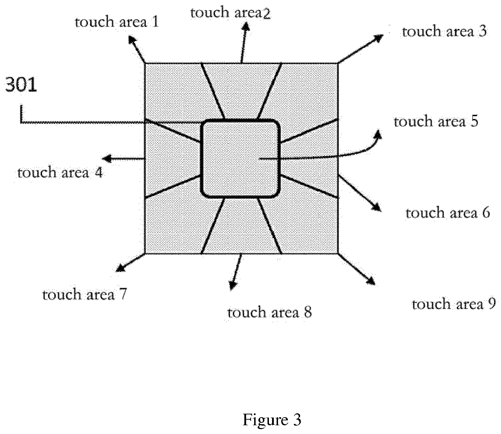

Figure 3 is a diagram showing the partition of a touch pad according to the first embodiment of the present invention.

A physical key is configured as a lower part of the touch sensing device 102, the physical key and the touch pad compose a physical touch key in big size. Lines 301 which can be perceived by a user through fingering may be provided on the surface of the touch pad. These lines function to partition the touch pad into several touch areas and allow the user to touch each area precisely. In practice, the surface of the touch pad is preferably partitioned into nine touch areas, as shown in figure 3, wherein the touch area 5 is in the center of the touch pad and others touch areas of 1-9 are located around the touch area 5.

Embodiment 2

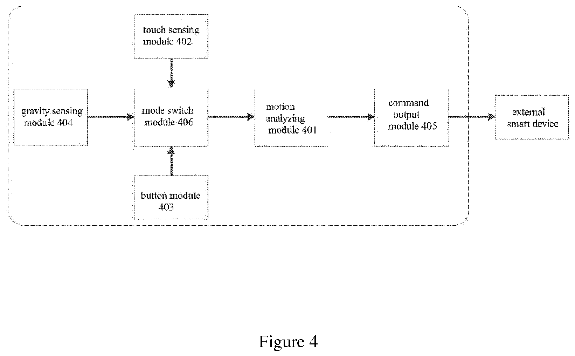

Figure 4 is a structural diagram showing data flow of a touch sensing controller according to a second embodiment of the present invention.

Based on the first embodiment, the controller according to the second embodiment may be divided into following modules according to their specific function: a motion analyzing module 401, a touch sensing module 402, a button module 403, a gravity sensing module 404, a command output module 405 and a mode switch module 406.

Wherein the touch sensing module 402 comprises a touch sensing device and a driving circuit thereof. The touch sensing module 402 is configured for gathering data on users' touch operation and sending the data to the mode switch module 406.

The button module 403 comprises physical buttons and corresponding control circuits. The button module 403 is configured for gathering data on user's press operation on buttons and sending the data to the mode switch module 406.

The gravity sensing module 404 comprises a gravity sensing device and a driving circuit thereof. The gravity sensing module 404 is configured for gathering data on gravity of the controller and sending the data to the mode switch module 406.

The mode switch module 406 comprises a physical mode switch button and a corresponding control circuit. The mode switch module 406 is configured for marking the data received from the touch sensing module 402, the button module 403 and the gravity sensing module 404 with the operation mode and sending the marked data to the motion analyzing module 401. The motion analyzing module 401 comprises a microprocessor and is configured for carrying out analysis on the data received from the mode switch module 406 and generating a command and sending the command to the command output module 405.

The command output module 405 comprises a data output device and a driving circuit thereof. The command output module 405 is configured for sending the command received from the motion analyzing module 401 to the external smart device to be controlled.

Hereinafter the way in which the embodiment works is described in detail.

The operation process starts from gathering data generated by the touch sensing module 402, the button module 403 and the gravity sensing module 404. The touch sensing module 402 is configured for transmitting absolute coordinates of the point on the touch pad the user's finger contacts, meanwhile, the relative coordinates of the sliding motion of the finger on the touch pad are transmitted by the touch pad continuously. A touch sensing data packet comes into being by combining the two sets of coordinates above. The button module 403 is configured for outputting the signal data corresponding to the press operation on the buttons by the user, which composes a button pressing operation data packet. The gravity sensing module 404 is configured for providing the data on gravity determined by how the controller is held, that is, a gravity data packet is formed by combining the data in horizontal direction and acceleration data on the swing of the held controller in real time. All these three data packets compose a set of command data.

After gathering the set of command data, the mode switch module 406 enters a mode determining step and the microprocessor records the mode status determined by the mode switch module 406 into the set of command data. Wherein the mode switch module 406 is configured for generating a tag of the current mode, marking each set of command data with the corresponding tag of current mode, generating data packets respectively corresponding to menu selection mode, game mode, mouse mode and text input mode, and displaying the current mode to the user via a certain indicator light. For instance, when the controller is in menu selection mode, the module generates a tag of menu selection mode and marks the set of command data with it, and the mode indicator light for menu selection mode is turned on.

The motion analyzing module 401 is configured for analyzing the set of the command data marked with the current mode status, and sending the analysis result to the command output module 405. The command output module 405 is a data exchange interface capable of connecting to a variety of devices and configured for exchanging data with corresponding smart devices. For example, the controller functions as a remote for a blue-tooth smart device, the data exchange between the command output module 405 and the corresponding blue-tooth smart device is realized via the blue-tooth interface. Obviously, other approaches can be employed by the command output module 405 to establish connection to smart devices, such as wireless network, infrared and sound waves, the skilled in the art can make selection as needed.

There are four following operation modes of the multifunctional controller: a menu selection mode, a game mode, a mouse mode and a text input mode, hereinafter the analysis process of the command data in each mode is described in detail:

The analysis process of the command data in the menu selection mode is as follows.

Generally, so as to realize the function of menu control, control command in absolute directions individually towards up, down, left, right, upper left, lower left, upper right and lower right is necessary. The directions are absolute on the display of the smart device while relative on the controller of handheld devices, because the direction in which the controller is held is prone to change. The directional coordinates of a certain operation when the controller is held horizontally defer from that when the controller is held vertically.

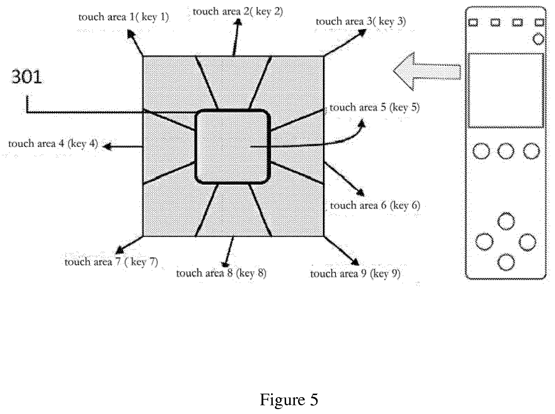

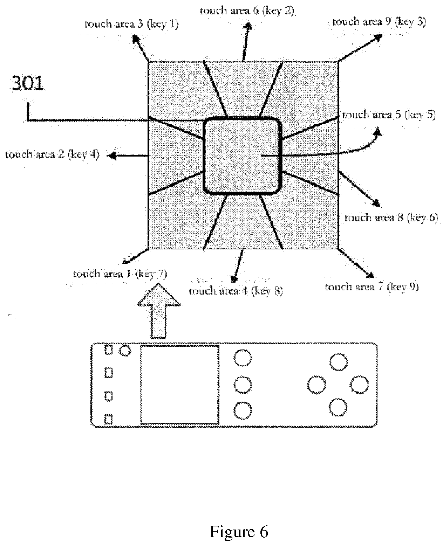

In the menu selection mode, the motion analyzing module 401 is mainly configured for presenting a menu control command by analyzing the absolute coordinates of the point being touched received by the touch sensing module 402, accompanied with the direction in which the controller is held. As the touch pad is partitioned into a number of touch areas by the lines 301, coordinates of each point on the touch pad belong to a certain touch area. The gravity data packet is utilized to implement directional calibration on the absolute coordinates. As shown in figure 5, when the controller is held vertically, the touch areas 1-9 correspond to the key 1-9 one to one, when the touch area 2 is touched, the coordinates of the point being touched are recognized as key 2. However, as shown in figure 6, if the controller is held horizontally, the touch area 1 corresponds to the key 7, the touch area 2 corresponds to the key 4, the touch area 3 corresponds to the key 1, the touch area 6 corresponds to the key 2 and so on, in this case, if the touch area 2 is touched by the user, the coordinates of the point being touched are recognized as key 4. After getting the number of the key corresponding to the coordinates of the point being touched by the user, the motion analyzing module 401 waits for a press on the physical key, thereby a menu selection command is formed by combining the number of the key corresponding to the point being touched and the press on the physical key. For instance, as shown in figure 5, the user holds the controller vertically, touches the touch area 2, presses the physical key under the touch pad, and then the above motion is recognized by the motion analyzing module 401 as an upward menu command. As shown in figure 6, the user holds the controller horizontally, touches the touch area 2, presses the physical key under the touch pad, and then the above motion is recognized by the motion analyzing module 401 as a menu command towards the left.

The analysis process of the command data in the mouse mode is as follows.

The mouse functions to record data on a trajectory and implement the operation of click. In the mouse mode, the embodiment works in the following way: the touch sensing module 402 analyzes the absolute coordinates of the point being touched and the relative coordinates of the sliding motion of the finger, and thereby data on a trajectory is obtained. Similarly, the absolute orientation of the trajectory can be obtained by the motion analyzing module 401 by combining the gravity sensing module 404. For example, when the user holds the controller vertically and slides the finger from the touch area 5 to the touch area 4, the motion analyzing module 401 recognizes the operation and outputs a command of a mouse move towards the left. Otherwise, when the user holds the controller horizontally and slides the finger from the touch area 5 to the touch area 4, the motion analyzing module 401 recognizes the operation and outputs a command of a downward move of the mouse. The click function can be realized by the button module 403 through outputting directly a click command on corresponding key of the mouse. For instance, when the user holds the controller vertically, slides the finger from the touch area 5 to the touch area 4 and press the physical key under the touch pad, the motion analyzing module 401 outputs a command of a mouse slide towards the left and a click on the left button of the mouse.

The analysis process of the command data in the game mode is as follows.

In the game mode, the set of the command data provided by the present invention can satisfy requirements of various games.

Traditional games need control in cross directions, which can be realized in a similar way to the direction control in the menu selection mode, which is needless to be repeated here.

Touch control games need data on the trajectory of gesture, which can be obtained by analyzing the set of command data. For instance, in the touch-screen game named <ANGRY BIRDS>, tracking data on the relative displacement of the finger is needed, and the direction in which the bird pops out is determined by computing the tracking data. The tracking data of the directional control of a finger can be obtained on the basis of the relative coordinates of the motion of the finger provided by the touch sensing module 402 in the embodiment.

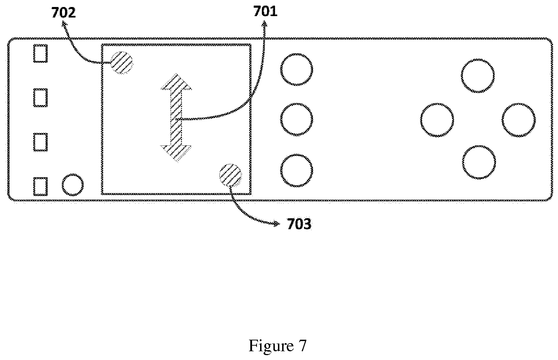

Some games are under the control of a certain finger gesture in an absolute position of the screen. For instance, in the touch-screen game named <TEMPLE RUN>, the user needs to slide the finger upwards or downwards on the central part of the screen, meanwhile the user needs to click the upper-left corner of the screen to use the game props, or the lower-right corner to make a pause /play the game. Only by carrying out gesture operation in corresponding positions of the touch pad, the user can realize the gesture control of the games. As shown in figure 7, when the user holds the controller horizontally, sliding the finger upwards or downwards on the central part 701 of the touch pad corresponds to sliding upwards and downwards in the game; clicking the upper-left corner of the touch pad 702 on the controller corresponds to clicking the upper-left corner to use the game props in the game; clicking the upper-right corner of the touch pad 703 on the controller corresponds to clicking the lower-right corner to make a pause/play the game.

Some games require the user to hold and swing the controller to achieve the control thereof. For instance, in the above touch-screen game named < TEMPLE RUN >, the user needs to rotate the screen clockwise to realize the control of turning right in the game while rotate the screen anticlockwise to realize the control of turning left in the game. The data on the direction in which the controller is held and the data on the motion of the controller provided by the gravity sensing module 404 can meet the requirement for control of this game.

In practice, screens of smart devices to be controlled are in various sizes, the gesture slide in absolute position can be realized by computing the mapping coordinates. The touch pad in this embodiment is preferred to be square, and the motion analyzing module 401 needs to map the coordinates on the touch pad (x, y) to the game control coordinates (a, b). For instance, the number of dots per inch (DPI) of the touch pad is 192, and the size thereof is 1 inch (i.e. having 192*192 operable coordinates). There is a game for a 1080P high definition screen and the number of the operable coordinate points is 1920*1080. When the user touches the point with absolute coordinates (100, 50), the motion analyzing module 401 computes the mapping coordinates in the following way:

$$x=100$$

$$a=(1920/192)*100=1000$$

$$y=50$$

$$b=(1080/192)*50\approx281,$$

the command output module 405 outputs the command obtained by the motion analyzing module 401 to the smart device, that is, clicking the point (1000, 281).

The analysis process of the command data in the text input mode is as follows.

As shown in figure 5, the touch pad is petitioned into 9 touch areas. When these touch areas are touched individually, nine different kinds of electronic signals are formed, and hereby the following setting can be made in advance: when receiving each of the nine kinds of electronic signals, one of the numbers 1-9 is inputted accordingly to the smart device. Similarly, other correspondence between the electronic signal received and the item inputted can be set in advance for the smart devices so as to realize other input methods, such as T9 input method.

Further, text input can be realized by presetting the correspondence between the electronic signals generated according to various slide motions and input information. For instance, as shown in figure 5, the touch pad is partitioned into 9 touch areas, if a first electronic signal is caused by a slide from the touch area 1 to touch area 2, a second electronic signal is caused by a slide from the touch area 1 to touch area 4, a third electronic signal is caused by a slide from the touch area 1 to touch area 5, a fourth electronic signal is caused by a slide from the touch area 1 to the outside of the touch pad, and so on, and thereby forty kinds of different electronic signals can be obtained. By presetting the correspondence between the electronic signals and the item inputted in the smart devices, input of the 26 letters and other customized functions, such as input of spaces, input of symbols, and copy/ paste, can be achieved.

In conclusion, the well designed touch sensing controller according to the present invention is capable for versatile multifunctional control of devices by using the touch sensing device and so on. Meanwhile, the invention incorporates the gravity sensing technique into the controller, whereby multiple operation solutions can be provided according to the direction in which the controller is held to optimize the user experience.

Hereinbefore only preferred embodiments of the present invention are described, which do not mean any limit to the scope of the protection of the present invention. It should be noted, any modification or improvement carried out by the skilled in the art within the principle of the present invention should be taken as within the scope of protection of the present invention.

## Claims

1. A touch sensing controller, comprising a touch sensing device, a gravity sensing device, physical buttons, a control circuit and a power supply device; wherein the touch sensing device, the gravity sensing device and the physical buttons are connected to the control circuit individually; the touch sensing device comprises a touch pad and a physical key; the physical key is provided underneath the touch pad and together with the touch pad composes a physical touch key; the touch sensing device, the gravity sensing device and the control circuit are all connected to the power supply device.

2. The touch sensing controller according to claim 1, **characterized in that** the touch sensing controller further comprises a physical mode switch button and a mode indicator light; the physical mode switch button and the mode indicator light are connected to the control circuit individually; and the mode indicator light is also connected to the power supply device.

3. The touch sensing controller according to claim 1, **characterized by** further comprising a data output device.

4. The touch sensing controller according to claim 1, **characterized in that** the control circuit further comprises a microprocessor.

5. The touch sensing controller according to claim 1, **characterized in that** surface of the touch pad is provided with lines which can be perceived by a user through fingering and partition the touch pad into several touch areas.

6. The touch sensing controller according to claim 5, **characterized in that** the touch areas comprise a central touch area and multiple surrounding touch areas around the central touch area.

7. The touch sensing controller according to any of claims 1-6, **characterized in that** physical buttons are programmable.

Figure1

Figure 2

Figure 3

```
┌─────────────────────────────────────────────────────────────────────────────┐
│                          ┌──────────────┐                                      │
│                          │ touch sensing │                                     │
│                          │ module 402    │                                     │
│                          └──────┬───────┘                                      │
│                                 │                                              │
│                                 ▼                                              │
│  ┌──────────────┐        ┌──────────────┐     ┌──────────┐    ┌──────────┐    ┌──────────┐
│  │gravity sensing│──────▶│ mode switch  │────▶│  motion   │──▶│ command  │──▶│ external │
│  │ module 404    │       │ module 406   │     │ analyzing │   │ output   │   │smart device│
│  └──────────────┘        └──────▲───────┘     │module 401 │   │module 405│   └──────────┘
│                                 │             └──────────┘    └──────────┘    
│                          ┌──────────────┐                                      │
│                          │button module │                                     │
│                          │     403      │                                     │
│                          └──────────────┘                                      │
└─────────────────────────────────────────────────────────────────────────────┘
```

Figure 4

Figure 5

touch area 6 (key 2)

touch area 3 (key 1)

touch area 9 (key 3)

301

touch area 5 (key 5)

touch area 2 (key 4)

touch area 8 (key 6)

touch area 1 (key 7)

touch area 4 (key 8)

touch area 7 (key 9)

Figure 6

Figure 7

## INTERNATIONAL SEARCH REPORT

| International application No. |
| --- |
| **PCT/CN2015/085000** |

### A. CLASSIFICATION OF SUBJECT MATTER

G06F 3/041(2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI; EPODOC; CNKI; CNPAT: remote control, key board, control+, key+, button?, touch, gravity

### C. DOCUMENTS CONSIDERED TO BE RELEVANT

| Category* | Citation of document, with indication, where appropriate, of the relevant passages | Relevant to claim No. |
| --- | --- | --- |
| Y | CN 202014320 U (HAIER GROUP CORPORATION et al.), 19 October 2011 (19.10.2011), description, paragraphs 0033-0042 and 0047-0048, and figures 1-2 | 1-7 |
| Y | CN 103747314 A (LESHI ZHIXIN ELECTRONIC SCIENCE AND TECHNOLOGY (TIANJIN) CO., LTD.), 23 April 2014 (23.04.2014), claim 4, description, paragraphs 0032, 0039, 0051 and 0054, and figure 1 | 1-7 |
| PX | CN 204009771 U (HU, Jingtao), 10 December 2014 (10.12.2014), claims 1-7 | 1-7 |
| A | US 2006284855 A1 (KABUSHIKI KAISHA TOSHIBA), 21 December 2006 (21.12.2006), the whole document | 1-7 |
| A | CN 102843597 A (HISENSE BROADBAND MULTIMEDIA TECHNOLOGIES CO., LTD.), 26 December 2012 (26.12.2012), the whole document | 1-7 |
| A | CN 203012942 U (Z-GAN TECHNOLOGY CO., LTD.), 19 June 2013 (19.06.2013), the whole document | 1-7 |
| A | CN 103065447 A (Z-GAN TECHNOLOGY CO., LTD.), 24 April 2013 (24.04.2013), the whole document | 1-7 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 September 2015 (16.09.2015) | **25 September 2015 (25.09.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Ziwen** Telephone No.: (86-10) **62413190** |
| --- | --- |

Form PCT/ISA/210 (second sheet) (July 2009)

## INTERNATIONAL SEARCH REPORT
### Information on patent family members

| International application No. |
| --- |
| **PCT/CN2015/085000** |

| Patent Documents referred in the Report | Publication Date | Patent Family | Publication Date |
| --- | --- | --- | --- |
| CN 202014320 U | 19 October 2011 | None | |
| CN 103747314 A | 23 April 2014 | None | |
| CN 204009771 U | 10 December 2014 | None | |
| US 2006284855 A1 | 21 December 2006 | JP 4034796 B2 | 16 January 2008 |
| | | JP 2006350814 A | 28 December 2006 |
| | | US 7612766 B2 | 03 November 2009 |
| CN 102843597 A | 26 December 2012 | None | |
| CN 203012942 U | 19 June 2013 | None | |
| CN 103065447 A | 24 April 2013 | CN 103065447 B | 30 July 2014 |

Form PCT/ISA/210 (patent family annex) (July 2009)